# EUROPEAN PATENT SPECIFICATION

(11) **EP 0 744 075 B1**
(45) Date of publication and mention of the grant of the patent: **23.04.2003**
(21) Application number: 95907673.8
(22) Date of filing: 09.02.1995
(51) Int. Cl.: H01B 1/12, C08L 79/02, C08K 5/42

(54) **USE OF AN ELECTRICALLY CONDUCTING POLYMER COMPOSITION.**
ANWENDUNG VON ELEKTRISCH LEITFÄHIGEN POLYMERZUSAMMENSETZUNGEN.
UTILISATION D'UNE COMPOSITION POLYMERE ELECTROCONDUCTRICE

(30) Priority: 10.02.1994 FI 940621
(43) Date of publication of application: 27.11.1996
(73) Proprietor: Panipol Oy, 06100 Porvoo (FI)
(72) Inventor: IKKALA, Olli, FIN-00160 Helsinki (FI); KIRMANEN, Pauli, FIN-06450 Porvoo (FI); SAVOLAINEN, Esko, FIN-15880 Hollola 3 (FI); VIRTANEN, Esa, FIN-06100 Porvoo (FI)
(74) Representative: Forstén, Marita Kaarina
(86) International application number: FI9500054
(87) International publication number: WO95022151

(56) References cited:
- EP-A- 0 545 729
- WO-A-90/10297
- WO-A-93/15510
- US-A- 5 340 499
- Kirk-Othmer, Encyclopedia of Chemical Technology, third edition, volume 8, pages 626-640, John Wiley & Sons, 1979.

## Description

The invention relates to the use an electrically conductive thermoplastic elastomer composition which comprises a thermoplastic elastomer and a doped aniline polymer, characterized in that the elastomer composition returns to its former shape by at least 85% after a streching of 50% and in that the electrical conductivity of the elastomer composition decreases less than one decade during and after the stretching for applications which require the retaining of electrical conductivity on streching.

Thermoplastic elastomers were launched on the market c. 1960. They have many physical properties typical of rubbers, such as softness, flexibility and resilience, but, in a manner deviating from conventional rubbers, they can be processed in the manner of thermoplastic resins. Rubbers have to be bridged irreversibly in order to achieve usable properties, whereas a thermoplastic elastomer is melt-processible and, when cooled, is rapidly and reversibly converted into a solid rubber-like product. Thermoplastic elastomers can be processed using a conventional plastics processing apparatus, such as an extruder, compounder, kneader or injection molder, the residues often being recycled.

Owing to increased production and a lower price of the raw material, thermoelastic polymer materials constitute a considerable and increasing proportion of the total production of plastics. Thermoelastic polymers are used mainly in fields in which thermal resistance and resistance to solvents are not required.

Thermoelastic polymers are multi-phase compositions in which the phases are closely dispersed with each other. In many cases the phases are chemically bonded to each other by block polymerization or graft polymerization. In others, a fine dispersion suffices. At least one of the phases is made up of a material which is hard at room temperature but becomes liquid when heated. The other phase consists of a softer material, which is rubber-like at room temperature. A typical and simple structure is an A-B-A block polymer, in which A is the hard phase and B is the soft phase, i.e. the elastomer block.

Most polymers are thermodynamically incompatible with other polymers, and their mixtures separate into two phases. This holds true even when the polymers are parts of the same molecule, as in these block polymers. The hard A end blocks form in the material separate three-dimensional areas which are dispersed in the continuous B-phase, i.e. the soft phase. At room temperature these A-block areas are hard and serve as physical bridges which bond together the soft chains into a three-dimensional network. This resembles the vulcanization structure of conventional rubbers, with the exception that in thermoplastic elastomers the hard A-block areas lose their strength when the material is heated or dissolved in solvents. For this reason the polymer is capable of flowing when heated or dissolved. When the material is then cooled or the solvent is evaporated, hard A-block areas and soft B-block areas are again formed and the elastic network is re-created.

The most important thermoplastic elastomers (TPE) in 1991 were the following, and their proportions of world-wide sales are indicated after the polymer category:
1. styrene-type block polymers (SBC) 44 %
2. polyolefin-based elastomers (TPO/TPV) 29 %
3. polyurethane-based elastomers (TPU) 13 %
4. polyester-based elastomers (COPE) 5 %

Recently, attention has begun to be paid to electrically conductive thermoplastic elastomers. Electrical conductivity is produced by mixing a fine-grained, electrically conductive powder with an elastomer matrix, the electrical conductivity of the created composite (moldable matrix + solid electrically conductive powder) being produced by contact between powder particles. In the case of thermoplastic elastomers this means that an electrically conductive elastomer is prepared by melt or solution processing, during which the electrically conductive powder remains in solid state.

JP-63086781-A discloses an anisotropically conductive adhesive sheet which comprises a styrenelethylene/butene/styrene block polymer, a coumarone-indene resin, an aliphatic petroleum resin, and an electrically conductive powder. The electrically conductive powder is preferably a metal powder or a metal-coated resin powder. The sheet obtained has high adhesiveness, high thermal resistance, and high resistance to moisture. It is used for making fine printed circuit boards.

JP-62181379-A discloses an anisotropically conductive adhesive sheet of a similar type, intended for the connecting of circuits, the adhesive sheet comprising a styrene/butadiene/styrene block polymer, coumarone resin, terpene resin, and electrically conductive particles. The conductive particles are of metal, metal-coated resin, or metal-coated glass. The adhesive sheet has a high adhesiveness, and even when it is used for making fine-structured circuits, a reliable electrical conductivity is accomplished.

In all of the publications cited above, an electrically conductive, non-melting material is blended with a non-conductive thermoplastic elastomer matrix. Such a multi-phase composite has the disadvantage that the electrical conductivity is dependent on mechanical contact between electrically conductive particles, in which case the minimum content which produces electrical conductivity, i.e. the percolation threshold, is high, and the sensitivity of the electrical conductivity to deformations of the composite is high. This problem of homogeneity associated with electrical conductivity is emphasized especially in thermoplastic elastomers, which even otherwise have hard bridging areas and soft elastomeric areas. Furthermore, a filler such as metal powder weakens specifically those mechanical properties of the composite which are required of an elastomer, i.e. softness, flexibility, stretchability, and elasticity. It is considered a great problem in the art that intrinsically conductive polymers, such as aniline polymers, are usually not melt or solution processible, i.e. thermoplastic. Thus the blending of a conventional electrically conductive polymer with a thermoplastic elastomer will not solve this problem. The acidity of conductive polymers doped with protic acids also significantly complicates the use of conductive polymers in many applications. Acid products cause difficulties, for example, in the use of the apparatus for the preparation and processing of conductive polymers, since eroding and corrosion of the apparatus would become a problem. Furthermore, many conductive polymer applications presuppose neutral or nearly neutral materials, and thus the applications of the conductive material, which is good as such, remain few in practice.

Use is preferably made of an electrically conductive, thermoplastic elastomer composition which comprises
a) an amount of 10-99 % by weight of a thermoplastic elastomer and
b) an amount of 0.5-90 % by weight of an aniline polymer which is a conjugated homo- or copolymer made up of at least an unsubstituted and/or substituted aniline mer which is doped with a protic acid, the protic acid functionalizing it in such a way that the aniline polymer is melt-processible or solution-processible.

It has thus been realized that an elastomer composition based on a thermoplastic elastomer and an electrically conductive polymer is superior if also the electrically conductive polymer is thermoplastic. Such a superior elastomer composition is produced by using a non-conventional thermoplastic, electrically conductive polymer which is obtained by reacting a conjugated homo- or copolymer, made up of at least unsubstituted and/or substituted aniline mers, at an elevated temperature with a protic acid which both dopes and functionalizes, i.e. plasticizes, the said conjugated homo- or copolymer.

According to one embodiment, an elastomer composition according to the invention comprises a thermoplastic elastomer and a doped aniline polymer obtainable by heating at an elevated temperature an undoped aniline polymer together with a protic acid which dopes and functionalizes it. It is preferable that the thermoplastic, doped aniline polymer is obtained by reacting a conjugated homo- or copolymer, made up of at least aniline mers and/or substituted aniline mers, with a protic acid which dopes it, at a temperature which is 80-250 °C, preferably 120-210 °C, most preferably 150-200 °C.

The conductive component, i.e. the thermoplastic doped aniline polymer, of the electrically conductive elastomer composition used according to the invention is preferably obtained by reacting a conjugated homo- or copolymer, made up of at least unsubstituted and/or substituted aniline mers, together with a protic acid at a pressure which is approx. 1-10⁴ kPa. The heating time required for the reacting may vary greatly and is 10 s - 20 min according to one embodiment. The conjugated homo- or copolymer made up of substituted or unsubstituted aniline mers is preferably reacted by means of shear forces with a protic acid which dopes and functionalizes it. By shear forces is meant shear forces of the same type as are used in the melt processing of plastics. In this case it is possible advantageously to use common melt-processing apparatus for plastics, such as kneaders, screw blenders, and extruders. By using them, a plastic and homogenous thermoplastic doped aniline polymer is obtained at an elevated temperature.

According to another embodiment, the said aniline polymer is protonated by heating it together with a functionalizing protic acid and a solvent, and by removing the solvent. The solvent is preferably a C₁-C₁₀ alcohol such as ethanol.

The doped aniline polymer component of the elastomer composition used according to the invention is substantially thermoplastic, i.e. moldable in heat, and solution processible, and it is obtained by reacting a conjugated homo- or copolymer, made up of at least unsubstituted and/or substituted aniline mers, at an elevated temperature and/or in a solvent with a doping protic acid. Some typical such conjugated initial materials for an aniline polymer are polymers having in their polymer chains various quantities of phenylene amine and quinone-imine type frame segments, and which include leucoemeraldine, protoemeraldine, emeraldine, nigraline, and pernigraline. Dopable aniline-based homo- or copolymers usable in the present invention are listed, for example, in US patent publication 5 171 478, 5 281 363, and WO publication 90/10297.

According to one preferred embodiment, an unsubstituted polyaniline homopolymer, i.e. polyaniline, is used as the conjugated homo- or copolymer which is made up of at least unsubstituted and/or substituted aniline mers. As was already mentioned, it may be present in a leucoemeraldine, protoemeraldine, emeraldine, nigraline, or pernigraline form. The most preferred polyaniline form for use in the present invention is its emeraldine form, i.e. emeraldine base form, which is in general depicted with the molecular formula 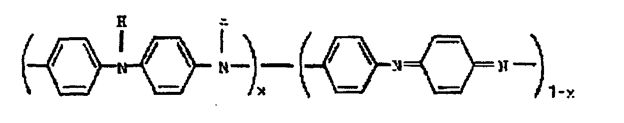 where x is approx. 0.5.

In general, the number of repeat units in the aniline polymer to be doped is not critical and may vary greatly.

Usable aniline polymers may be prepared by chemical or electrochemical synthesis methods. Polyaniline may be prepared, for example, by polymerizing aniline with ammonium persulfate in the presence of 1 M hydrochloric acid. This powder form of polyaniline is bluish green in color. It is electrically conductive and can be brought to a non-conductive form by treating it with an ethanol solution of ammonium hydroxide, whereby a non-conductive polyaniline form is obtained.

In the invention, the doped aniline polymer is a substantially melt-processible doped aniline polymer obtained by reacting an aniline polymer, as defined above, with a protic acid which dopes the said aniline polymer to an electrical conductivity of at least approx. 10⁻⁹ S/cm and which is a functionalizing protic acid so that it also plasticizes and compatibilizes the polyaniline, whereupon it will be solution processible and melt processible together with a thermoplastic matrix polymer. Such protic acids include the compounds according to the following formula

RXM

wherein R is an organic group or amino, X is an anionic group such as PO₃²⁻, PO₂(R₁)⁻, BO₂²⁻, SO₃⁻, CO₂⁻, PO₂²⁻, PO(R₁)⁻ and/or SO₂⁻, and M is one proton or cation or several protons or cations, provided that it includes at least one proton. Protic acids usable in the present invention are listed, for example, in US patent 5 281 363.

A protic acid according to the above formula is especially preferable when R is an aromatic ring or ring system. Typical usable aromatic protic acids are sulfonic acids, regarded as preferable, for example unsubstituted or substituted benzenesulfonic acids, benzenedisulfonic acids, naphthalenesulfonic acids, naphthalenedi- and trisulfonic acids, anthracenesulfonic acids, phenatrenesulfonic acids, biphenylmono- and disulfonic acids, etc. Benzenesulfonic acids substituted with a long alkyl, such as dodecylbenzenesulfonic acid, have been found to be especially preferable in the invention.

The thermoplastic doped aniline polymer for use in an elastomer composition according to the invention is preferably prepared in such a manner that the molar ratio of the undoped aniline polymer to the doping protic acid, to be reacted with each other, is in the heated reaction within a range of approx. 0.05-3.0, preferably approx. 0.1-1.0, and most preferably approx. 0.125-0.5. Other details relating to the method of preparing a doped aniline polymer can be obtained from, for example, EP patent application 545729 and the corresponding US patent 5,346,649.

The present invention is thus based on the fact that both the thermoplastic elastomer and the doped aniline polymer of the elastomer composition according to the invention are in plastic form during melt or solution processing. In order to produce a melt-processible doped polyaniline, a plasticizer which will plasticize the doped aniline polymer may be added to the composition. The plasticizer used may be, for example, water, alcohols, ethers, ketones, urea compounds, phenols, substituted and unsubstituted aromatic compounds, amides and phosphorus amides, organic sulfur compounds, amines, esters, aromatic acids and their esters, aliphatic acids and their esters, including fatty acids and their esters, glycols and glycol derivatives, phosphates, silicates, borates, aromatic and aliphatic sulfonic acids and their derivatives, fluorinated carboxylic acids and fluorinated sulfonic acids, synthetic waxes, thermoplastic resins.

Examples of plasticizer belonging to these categories are presented in US patent publication 5 171 478.

Metal compounds having a plasticizing effect have been found to be especially preferable. This concerns quite particularly metal compounds the softening point of which is below approx. 300 °C. When a metal compound which has a plasticizing effect and which reacts with the doping protic acid is used, there is often also gained the advantage that the pH of an otherwise acidic doped aniline polymer, difficult to handle, is neutralized to the range 3-8. However, the above-mentioned preferable acidity limits (pH 3-8) achieved;by using the method according to the invention can be further widened for certain special applications. Conductive plastics blends having a pH value even below 3 or above 8 can be used for certain purposes, and such plastics blends can be obtained by suitably selecting the matrix polymers to be blended with the conductive polymer material.

According to one preferred embodiment, the metal in a metal compound suitable for use as a plasticizer is a metal belonging to any of groups 1-4 (IUPAC) of the Periodic Table of the Elements, such as zinc, copper, magnesium, barium, aluminum, calcium, titanium, zirconium, cadmium, lead, and/or stannium. In the present invention it is especially advantageous to use as the plasticizer metal compounds which are based on the metals zinc, copper, calcium, and/or magnesium. Plasticizing compounds based on zinc are especially preferable.

According to one embodiment, the other component of the metal compound is a protic acid residue. The plasticizer is in that case a metal salt preferably of protic acid, more preferably of a non-oxidizing organic protic acid, even more preferably of an aromatic sulfonic acid, and most preferably of a long-chain alkarylsulfonic acid, such as dodecylbenzenesulfonic acid. Even though it is not indispensable that the protic acid used in the plasticizer is the same as the doping and functionalizing protic acid used in the doped aniline polymer, it is, nevertheless, preferable if it is so. The plasticizing can thus be accomplished by using the doping protic acid in excess in proportion to the aniline polymer to be doped, and at least a stoichiometric amount of a metal compound reacting with the same protic acid, the metal compound thus reacting with the excess protic acid and forming a plasticizer deemed to be preferable in the invention.

On the basis of the foregoing it is preferable if the plasticizer is a reaction product of a zinc compound and an aromatic sulfonic acid, obtained by causing zinc oxide or zinc hydroxide, preferably zinc oxide, and an alkylaromatic sulfonic acid, such as dodecylbenzenesulfonic acid, to react with each other, for example by heating.

When the plasticizer is prepared from a metal compound and protic acid, it is preferable to use a metal compound to protic acid ratio which is within the range 0.1•E - 10•E, where E stands for the valence ratio of the metal to the protic acid. When, for example, zinc oxide, ZnO, is used as the metal compound and dodecylbenzenesulfonic acid, DBSA, having one acid group, is used as the protic acid, one zinc atom will react with two acid molecules. As the valence of zinc is thus two and the valence of the acid is one, the ratio between their valences is 2. Thus their molar ratio is, on the basis of the above, 0.2-20. An especially preferable molar ratio is 0.5 E - 2 E, and the best is approx. 1.0 E.

When the plasticizer is combined with the principal components of the elastomer composition according to the invention, which are a thermoplastic elastomer and a thermoplastic doped aniline polymer, the proportion of the plasticizer may vary widely within the range 0.5-40 % by weight, and there is no critical limit considering the function of the plasticizer. It has, however, been observed that an especially preferable molar ratio of the repeat units of the doped aniline polymer to the molecules of the plasticizer is approx. 0.20-20, preferably approx. 0.3-10.

Additional information regarding the metal compound plasticizing the doped aniline polymer can be found in EP application publication 582 919 or US patent 5,340,499.

The principal component of the electrically conductive elastomer composition according to the invention and the source of its typical mechanical properties is the thermoplastic elastomer component. As was pointed out in the preamble, by a thermoplastic elastomer is meant a multi-phase composition in which the phases are closely dispersed. The phases are usually chemically bonded to each other by block or graft polymerization, although the protective scope of the invention also covers elastomer components and mixtures which, without chemical bonds, together form a thermoplastic elastomer composition.

In the elastomer composition according to the invention, preferably a block polymer is used in which the elastomer chain lengths, i.e. blocks, are made up, on the one hand, of a plurality of mers, i.e. monomer units, of a hard elastomer and, on the other hand, of a plurality of mers of a soft elastomer. Such block polymers include A-B-A-type and (A-B)ₙ-type block polymers, in which the A-block is the so-called hard phase and the B-block is the so-called soft, i.e. elastomer, phase. Thus, in a thermoplastic elastomer component according to the invention, A may be any block of a polymer classifiable as a hard thermoplastic, such as a block of polystyrene, polymethyl metacrylate, polypropylene, etc., and B may be any block of a polymer normally classifiable as a soft resin or elastomer, such as polyisoprene, polybutadiene, polyisobutylene, polydimethyl siloxane, polyethyle-ne/alkene, etc. Typical thermoplastic elastomers usable in the invention, having a block-like structure, include poly(styrene block - butadiene block - styrene block), poly(styrene block - isoprene block - styrene block), poly(α-methylstyrene block - butadiene block - α-methylstyrene block), poly(α-methylstyrene block - isoprene block - α-methylstyrene block), poly(styrene block - ethylene-cobutene block - styrene block), poly(ethylene block - ethylene-cobutene block - ethylene block), poly(styrene block - dimethylsiloxane block - styrene block), poly(α-methylstyrene block - dimethylsiloxane block - α-methylstyrene block), poly(α-methylstyrene block - dimethylsiloxane block)ₙ, poly(sulfone block - dimethylsiloxane block)ₙ, poly(silfenylenesiloxane block - dimethylsiloxane block)ₙ, poly(urethane block - ester block)ₙ, poly(urethane block - ether block)ₙ, poly(ester block - ether block)ₙ, poly(carbonate block - dimethylsiloxane block)ₙ, and poly(carbonate block - ether block)ₙ.

Preferred block polymers for use as the thermoplastic elastomer component of the present invention include poly(styrene block - elastomer block - styrene block) (SBC, 44 %), polyolefin-based elastomers (TPO/TPV, 29 %), polyurethane-based elastomers (TPU, 13 %), and polyester-based elastomers (COPE, 5 %). Especially preferable are linear poly(styrene block ethylenebutene block - styrene block), linear poly(styrene block - butadiene block - styrene block), and branched poly(styrene block - butadiene block)ₙ. Additional information regarding thermoplastic elastomers suitable for an electrically conductive elastomer composition according to the invention can be obtained, for example, from the series Encyclopedy of Polymer Science and Engineering, 2nd edition, 1986, volume 5, pp. 416-430, and from the series Kirk-Othmer, Encyclopedia of Chemical Technology, 3rd edition, volume 6, pp. 626-640.

As was pointed out, an electrically conductive thermoplastic elastomer composition according to the invention comprises principally two components, i.e. a thermoplastic elastomer component and a doped plasticized aniline polymer, the latter component possibly containing a plasticizer. According to one preferred embodiment, the proportion of the doped aniline elastomer, or the entity made up of it and the plasticizer, in the total elastomer composition is approx. 1-70 % by weight, more preferably approx. 1.5-50 % by weight, and most preferably approx. 3-30 % by weight. The proportion of the thermoplastic elastomer in the total elastomer composition is preferably approx. 20-99 % by weight, more preferably approx. 50-98 % by weight, and most preferably approx. 70-95 % by weight. The proportion of plasticizer in the total elastomer composition is preferably approx. 1-35 %, most preferably approx. 2-20 % by weight. An electrically conductive elastomer composition according to the invention may also contain other components. In fact it is clear that it is possible to add to the composition additional components and auxiliaries of thermoplastic elastomers, known in the art, as well as additives and components of doped polymers, and in particular of aniline polymers. According to one embodiment, the electrically conductive elastomer composition according to the invention contains, in addition to the two components mentioned above, one or more elective plastics components, preferably thermoplastic.

The electrical conductivity of the conductive elastomer composition according to the invention depends on the application in a given case. The conductivity may be as low as 10⁻⁹ S/cm in the case of antistatic applications, whereas conductivity higher than 0.1 S/cm is required for EMI shielding applications.

The thermoplastic elastomer and the doped aniline polymer are contacted and can be melt processed into the form of a granulate, powder, fiber, coating, film, sheet, laminate, foam, hose, profile, blend, adhesive, sealant, composite, formed piece, or other melt-processed product or structure. The following components are contacted with each other and melt processed:
a) an amount of approx. 10-99 % by weight of a thermoplastic elastomer,
b) an amount of approx. 0.5-90 % by weight of a thermoplastic doped aniline polymer which has been obtained by reacting a conjugated homo- or copolymer made up of at least unsubstituted and/or substituted aniline mers with a protic acid functionalized to render the aniline polymer processible. The functionalization is carried out by heating the protic acid together with the aniline polymer to a temperature of 80-250 °C or by heating it together with the aniline polymer and a solvent and by evaporating the solvent. According to one embodiment there is also melt processed:
c) an amount of 0.5-40 % by weight of a plasticizer which plasticizes the thermoplastic, doped aniline polymer and promotes its flow.

The melt processing is thus carried out while the thermoplastic, doped aniline polymer is in a substantially molten state. The invention is thus based on the fact that, in addition to the thermoplastic elastomer, also the doped aniline polymer behaves thermoplastically, in which case the melt processing concerns two components in molten state and the product will be more homogenous and stronger than previously.

The aniline polymer used in the process according to the invention is obtained by causing a conjugated homo- or copolymer, made up of at least unsubstituted and/or substituted aniline mers, to react with a functionalizing protic acid which dopes and at the same time thermoplasticizes the said conjugated homo- or copolymer. In this case the melt processing takes place while the doped aniline polymer is in a substantially molten or plastic state.

An electrically conductive elastomer composition can be prepared more easily if the electrically conductive doped aniline polymer used in it is prepared by heating an undoped aniline polymer together with a dopant to a relatively high temperature, whereby the protic acid is functionalized and the behavior of the forming doped aniline polymer will be thermoplastic, in a manner deviating from the previous. It is especially preferable if the said undoped aniline polymer is heated together with the protic acid which dopes it at a temperature of 120-210 °C, most preferably 150-200 °C.

When a thermoplastic elastomer, a doped aniline polymer, and possibly a plasticizer are melt processed together, this preferably takes place by means of heat, pressure and shear forces, as in conventional processing of thermoplastics. The apparatus used may be any thermoplastics-processing apparatus, and the temperature is preferably within a range of approx. 80-300 °C.

An electrically conductive doped polyaniline can also be plasticized in a suitable solvent, such as ethanol, together with a protonating acid, whereafter the solvent is removed. In this method, also, a protic acid is used which functionalizes polyaniline in such a manner that it plasticizes and compatibilizes the aniline polymer, whereupon it can be melt processed together with some thermoplastic matrix polymer.

In the melt-processing method for the preparation of an electrically conductive elastomer composition it is also possible to use one or more plasticizers suitable for the plasticizing of the doped aniline polymer component. Such a plasticizer may be a plasticizer presented above in connection with the description of the elastomer composition, and is preferably a metal compound, more preferably a compound of a metal belonging to any of groups 1-4 (IUPAC) of the Periodic Table of the Elements, and most preferably a reaction product of an aromatic sulfonic acid, such as dodecylbenzenesulfonic acid, and a zinc compound, such as zinc oxide or zinc hydroxide.

A thermoplastic elastomer and a doped aniline polymer can also be dissolved, at least in part, in an organic solvent, the obtained solution is brought into the desired form, and the solvent is removed, whereupon there remains an electrically conductive elastomer composition which is in a suitable form and is made up of a thermoplastic elastomer and a doped aniline polymer. The doped aniline polymer is substantially thermoplastic in its properties, i.e. at least in part soluble in an organic solvent, in which case it is obtained by causing a conjugated homo- or copolymer made up of at least unsubstituted and/or substituted aniline mers to react in a solvent with a functionalizing protic acid, which both dopes and plasticizes the said conjugated homo- or copolymer to an electric conductivity of at least approx. 10⁻⁶ S/cm. In the dissolving, the doped aniline polymer thus obtained substantially dissolves in the solvent or swells therein.

In the solution-processing method the thermoplastic elastomer may be any thermoplastic elastomer referred to above in the discussion of the electrically conductive elastomer composition according to the invention, and the same applies to the doped aniline polymer. The selection of the solvent is not critical in terms of the success of the invention, since an expert in the art will be capable of finding suitable solvents, either with the aid of literature or through empirical experimentation. The essential point is that thermoplasticity, so rare in conductive elastomers, is exploited in the melt-processing method .

In the solution-processing method it is preferable to use the same components and the same component proportions as in the electrically conductive elastomer composition described above. In addition to a thermoplastic elastomer and a doped aniline polymer, preferably also a plasticizer which plasticizes the doped aniline polymer and is analogous to any of the plasticizer listed above in connection with the elastomer composition is dissolved in an organic solvent. As stated above, an especially preferred plasticizer is a metal compound having a plasticizing effect, preferably a plasticizing compound of a metal belonging to any of groups 1-4 (IUPAC) of the Periodic Table of the Elements. Most preferably the plasticizing compound is a reaction product, with plasticizing effect, of an aromatic sulfonic acid, such as dodecylbenzenesulfonic acid, and a zinc compound, such as zinc oxide or zinc hydroxide.

The properties and material proportions of the basic components of a completed elastomer product used according to the invention are briefly described above in connection with the electrically conductive elastomer composition. The methods of making products according to the invention are also discussed above. For an expert in the art it is also clear that in products according to the invention it is possible to use additives, such as fillers, lubricants and fluidizers, stabilizers and other anti-aging agents, flame retardants, pigments, foaming agents, bridging agents, and UV-shield agents. It is also clear that an expert in the art will know how to use correct additives in correct proportions. We mention the book Brydson, J.A., Plastics Materials, 4th edition, 1982, pp. 114-145.

A product according to the invention also contains a plasticizer which plasticizes the doped aniline polymer component, the plasticizer preferably being a metal compound having a plasticizing effect, more preferably a compound of a metal belonging to any of groups 1-4 (IUPAC) of the Periodic Table of the Elements, most preferably a reaction product of an aromatic sulfonic acid, such as dodecylbenzenesulfonic acid, and a zinc compound, such as zinc oxide or zinc hydroxide.

Below, a number of embodiment examples are presented in order to illustrate the invention.

### Embodiment examples

### Process steps

### Step 1

In all of the experiments, the polyaniline, metal compound, calcium compound and dodecylbenzenesulfonic acid were first mixed together. The solidification of the polymer complex was carried out advantageously by running the mixture through a screw blender in one or several heating sequences. In terms of operating technology, the same procedure was used in the solidification as is described in previous EP patent applications 545729, 582919 and FI-932578. Thereafter the plasticized PANI complex was dry mixed with the elastomer material (in weight ratios indicated below) in a Buss laboratory compounder MDK/E 46, the temperature being 140-170 °C and the rate of feed being 3 kg/h. Electrical conductivity was measured from the prepared conductive polymer complex, in either tape-like or granulate form.

### Step 2

The blended granulates were either injection molded or compression molded. Injection molding into ISO 527 test pieces was carried out by using an Engel ES200/50HL apparatus at 170 °C, the mold temperature being 60 °C. The quantity of granulates used for compression molding was 1.5 g, the mold was 60 × 60 × 0.2 mm³, compressive force 2 tonnes, preheating time 3 min at 160 °C, compression time 3 min at 160 °C, and cooling to 135 °C. The granulates were compressed into films 0.2 mm thick.

### Step 3

Electrical conductivity was measured by the 4-probe method from an ISO 527 tensile test piece in unstretched state, and also by the same method from a film in unstretched and in stretched state.

### Step 4

ISO 527 tensile test pieces were tested mechanically by using an Instron tension apparatus with a tension rate of 500 mm/min. The results are described using tension-elongation functions. The mechanical testing was carried out according to the standard ISO/R 527. Shore A hardness was measured according to the standard ISO 868.

### Elastomer materials

Three types of elastomers were used in the method:

### S-EB-S

A linear triblock polymer, poly(styrene block - (ethylenebutene) block - styrene), type Shell Kraton G 1651 was used. Represents a hydrogenated linear block polymer which does not have double bonds in the soft phase.

Polystyrene 32 % (Mw 30,000)
Poly(ethylenebutene) 68 % (Mw 122,000)

### S-B-S

A linear triblock polymer, poly(styrene block - butadiene block - styrene), type Shell Cariflex TR 1101 was used. A material corresponding to S-EB-S, but contains double bonds in the soft phase.

Polystyrene 30 %
Butadiene 70 %

### (S-B-)ₙ

A branched poly(styrene block - butadiene block - styrene)
(Shell Cariflex TR 1186). Corresponds to linear S-B-S, but the elastomeric phase contains branched chains.

Polystyrene 30 %
Butadiene 70 %

### Method M1

The conductive polymer used in the experiments was an emeraldine base form of polyaniline, EB, which was prepared according to the method disclosed in the publication Y. Cao, A. Andreatta, A.J. Heeger and Smith, Polymer, 30 (1989) 2305. Exceptionally, however, sulfuric acid H₂SO₄ is used in this method instead of hydrochloric acid HCl. The product was dried to a dry matter content of 49.1 %.

The doping agent (i.e. counter ion) used was a dodecylbenzenesulfonic acid (DBSA) by the trade name Sulfosoft.

The following initial materials (amounts in per cent by weight) were used for the preparation of the polymer complex:
EB 6.2 %
DBSA Sulfosoft 83.4 %
ZnO 8.9 %
CaCO₃ 1.5 %

The materials were mixed together, and a completely plasticized conductive polymer complex was obtained by a conventional screw solidification process.

### Method M2

### Preparation of polyaniline

An emeraldine base form of polyaniline, EB, was prepared as in method M1, but the protic acid now used was HCI. The product was dried to a dry matter content of 95 %.

### Preparation of PANI(DBSA)_{0.5} complex by "EB ethanol protonation"

A mixture of 8 g of EB (as in method M1) and 14.4 g of DBSA (Tokyo Kasei) was added to 110 ml of water-free ethanol, which was then stirred and heated at 78 °C for 1 h. Thereafter the ethanol was boiled off under vacuum at 60 °C. When most of the ethanol had evaporated, the remaining powder was dried under vacuum at 50 °C for 24 h.

### Preparation of Zn(DBS)₂

0.4 kg of zinc oxide ZnO and 1.5 1 ethanol (industrial quality) were stirred for 20 minutes in a Burger reactor. Thereafter 3.21 kg of DBSA (Sulfosoft) was added under stirring, and the mixture was heated to 70 °C. The ethanol was boiled off under vacuum in the course of 24 h at 110 °C, whereafter the mixture was ground by means of dry ice.

### Blending

PANI(DBSA)_{0.5}, Zn(DBS)₂ and elastomer powder were crushed and mixed mechanically in a mortar. The produced dry mixture was blended by using a clockwise-rotating conical twin-screw blender at a temperature of 190 °C at 100 rpm (when the elastomer material used was S-EB-S) or at 180 °C at 250.5 rpm (the elastomer being S-B-S or (S-B-)ₙ). The product made was a tape.

Compression molding into a film was carried out at 190 °C, preheating 15 s, compression 15 s, whereafter a rapid cooling was carried out between brass plates.

### EXAMPLES

### Example 1

By using method M1, a mixture was prepared from a PANI complex prepared by the procedure described above and an elastomer copolymer S-EB-S (Shell Kraton G 1651) at the mass ratio PANI:S-EB-S 10%:90%

The properties obtained as a result were as follows:

| | Conductivity (S/cm) | Elongation (%) | Strength (MPa) |
|---|---|---|---|
| Buss tape | 1,8 10⁻³ | | |
| ISO 527 | 9,5 10⁻⁵ | 166 | 2,8 |
| Film | 0,077 | | |

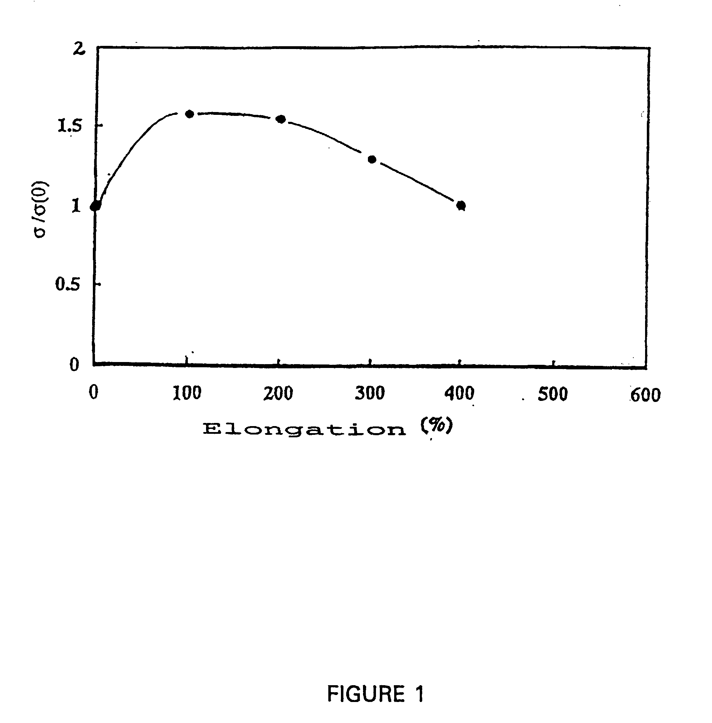

The conductivity of this elastomer mixture was also examined as a function of the elongation, and the results are shown in Figure 1. The vertical axis in the figure represents the ratio of the conductivity of stretched film to that of unstretched film, _{σ}/_{σ}(o), and the horizontal axis represents the elongation (%). The figure shows that the electrical conductivity of the elastomer mixture increases only to approx. 1.5-fold at an elongation of approx. 100-200 %, and still at an elongation of 400 % the conductivity is the same as that of an unstretched mixture.

### Example 2

In accordance with method M1, a mixture was prepared from a PANI complex and an elastomer copolymer S-EB-S (Shell Kraton G 1651) at the mass ratio PANI:S-EB-S 20%:80%.

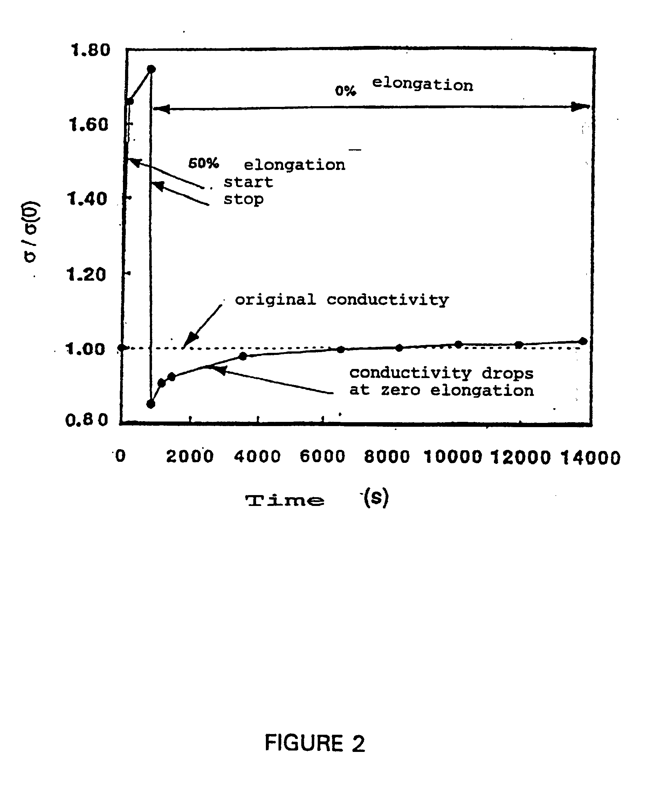

On this elastomer mixture, the change in electrical conductivity upon the reversal of the elongation was examined. In the experiment the mixture was stretched 50 %, and the elongation was allowed to reverse while the conductivity of the film was being measured. These results are shown in Figure 2. The vertical axis in the figure represents the ratio of the conductivity of stretched film to that of unstretched film, _{σ}/_{σ}(o), and the horizontal axis represents the time (s) from the reversal of the elongation. This figure shows that the conductivity of the elastomer mixture is increased to only approx. 1.7-fold at an elongation of 50 %, and after the reversal of the elongation the conductivity rapidly returns to the same level as that of an unstretched mixture.

### Example 3

By using method M2 in the manner described above, 0.063 g of PANI(DBSA)_{0.5}, 0.182 g of Zn(DBS)₂ and 3.255 g of an elastomer copolymer S-EB-S (Shell Kraton G 1651) were blended. The obtained conductivity was 3.4 10⁻⁴ S/cm.

After a stretching of 50 %, the permanent elongation of the product made from the mixture was less than 15 %.

### Example 4

In accordance with method M1, a mixture of a PANI complex and an elastomer copolymer S-B-S (Shell Cariflex TR 1101) was prepared at the mass ratio PANI:S-B-S 10%:90%.

After a stretching of 50 %, the permanent elongation of the product made from the mixture was less than 10 %.

### Example 5

In accordance with method M1, a mixture of a PAM complex and an elastomer copolymer S-B-S (Shell Cariflex TR 1101) was prepared at the mass ratio PANI: S-B-S 20% :80%.

After a stretching of 50 %, the permanent elongation of the product made from the mixture was less than 15 %.

### Example 6

In accordance with method M1, a mixture of a PANT complex and an elastomer copolymer (S-B-)ₙ (Shell Cariflex TR 1186) was prepared at the mass ratio PANI:(S-B)ₙ 10%:90%.

After a stretching of 50 %, the permanent elongation of the product made from the mixture was less than 10 %.

### Example 7

In accordance with method M1, a mixture of a PANI complex and an elastomer copolymer (S-B-)ₙ (Shell Cariflex TR 1186) was prepared at the mass ratio PANI:(S-B)ₙ 20%:80%.

After a stretching of 50 %, the permanent elongation of the product made from the mixture was less than 15 %.

**Table 1**

| Ex. No. | PANI:elastom. % by weight | Test piece | Conductivity (S/cm) | Elongation (%) | Stregth (MPa) |
|---|---|---|---|---|---|
| 1 | 10:90 S-EB-S | Buss tape ISO 527 Film | 1,8 10⁻³ 9,5 10⁻⁵ 0,077 | 166 | 2,8 |
| 2 | 20:80 S-EB-S | Buss tape ISO 527 Film | 9,9 10⁻³ 4,4 10⁻⁴ 0,235 | 171 | 2,97 |
| 3 | 7:93 S-EB-S | Film | 3,4 10⁻⁴ | 50 | 4,2 |
| 4 | 10:90 S-B-S | Buss tape ISO 527 Film | < 10⁻⁹ <10⁻⁹ < 10⁻⁹ | 812 | 9,48 |
| 5 | 20:80 S-B-S | Buss tape ISO 527 Film | 4,7 10⁻⁴ 7,2 10⁻⁴ 1,9 10⁻⁴ | 654 | 5,2 |
| 6 | 10:90 (S-B-)ₙ | Buss tape ISO 527 Film | 3,6 10⁻⁸ <10⁻⁹ <10⁻⁹ | 918 | 6,15 |
| 7 | 20:80 (S-B-)ₙ | Buss film ISO 527 Film | 1,7 10⁻⁴ 6,8 10⁻⁵ 2,6 10⁻³ | 244 | 2,74 |

## Claims

1. Use of an electrically conductive, thermoplastic elastomer composition which comprises a thermoplastic elastomer and a doped aniline polymer, **characterized in that** the elastomer composition returns to its former shape by at least 85 % after a stretching of 50 % and **in that** the electrical conductivity of the elastomer composition decreases less than one decade during and after the stretching for applications requiring the retaining of electrical conductivity upon stretching.

2. Use according to Claim 1, **characterized in that** the composition comprises
a) an amount of 10-99 % by weight of a thermoplastic elastomer and
b) an amount of 0.5-90 % by weight of an aniline polymer which is a conjugated homo- or copolymer made up of at least an unsubstituted and/or substituted aniline mer which is doped with a protic acid, the protic acid functionalizing it in such a way that the aniline polymer is melt-processible or solution-processible.

3. Use according to Claim 2, **characterized in that** the composition additionally comprises
c) an amount of 0.5-40 % by weight of a plasticizer which plasticizes the doped aniline polymer and promotes its flow.

4. Use according to any of the above claims, **characterized in that** the plasticizer which plasticizes the doped aniline polymer and promotes its flow is a metal compound the softening point of which is below 300°C and/or which adjusts the pH of the doped aniline polymer to the range 3-8.

5. Use according to any of the above claims, **characterized in that** the said aniline polymer is protonated and is obtainable by heating it together with the said functionalizing protic acid to a temperature of 80-250 °C, preferably to a temperature of 120-210 °C, most preferably to a temperature of 150-200 °C.

6. Use according to Claim 5, **characterized in that** the said aniline polymer is protonated and is obtainable by heating it, together with a protic acid which functionalizes it, by using blending shear forces of the type used in the melt processing of plastics, preferably by using an apparatus designed for the melt processing of plastics.

7. Use according to any of Claims 1-6, **characterized in that** the said aniline polymer is protonated and obtainable by heating it, together with a protic acid which functionalizes it, in a solvent and by removing the solvent by evaporation.

8. Use according to Claim 7, **characterized in that** the solvent is a C₁-C₁₀ alcohol, preferably ethanol.

9. Use according to any of Claims 2-8, **characterized in that** the doping protic acid is a non-oxidizing organic protic acid, preferably an aromatic sulfonic acid, and most preferably dodecylbenzenesulfonic acid.

10. Use according to any of Claims 5-9, **characterized in that** the molar ratio of the conjugated homo- or copolymer made up of at least unsubstituted and/or substituted aniline mers to the protic acid which dopes it is in the heated reaction within a range of 0.05-3.0, preferably within a range of 0.1-1.0, and most preferably within a range of 0.125-0.5

11. Use according to any of Claims 4-10, **characterized in that** the metal compound with a plasticizing effect is a metal belonging to any of groups 1-4 (IUPAC) of the Periodic Table of the Elements, preferably zinc.

12. Use according to any of Claims 4-11, **characterized in that** the plasticizer is a metal salt of a protic acid, preferably a non-oxidizing organic protic acid, more preferably an aromatic sulfonic acid, and most preferably dodecylbenzenesulfonic acid.

13. Use according to any of Claims 4-12, **characterized in that** the plasticizer is a reaction product of a zinc compound and an aromatic sulfonic acid, the reaction product being preferably obtained by contacting zinc oxide or zinc hydroxide with dodecylbenzenesulfonic acid at an elevated temperature.

14. Use according to any of Claims 3-13, **characterized in that** the molar ratio of the repeat units of the thermoplastic doped aniline polymer to the molecules of the plasticizer is within a range of 0.20-20, preferably 0.3-10.

15. Use according to any of the above claims, **characterized in that** the thermoplastic elastomer is a block polymer of a monomer of one or several types, forming a hard polymer, and a monomer of one or several types, forming a soft polymer, preferably a block copolymer of styrene and a monomer which forms a soft polymer, more preferably a poly(styrene block - conjugated diene block - styrene block) or poly(styrene block - (ethylene-1-alkene block) - styrene block) copolymer, most preferably a poly (styrene block - butadiene block - styrene block) or poly(styrene block - (ethylene-butene) block - styrene block) copolymer, or a combination or mixture thereof.

16. Use according to any of the above claims, **characterized in that** the proportion of the thermoplastic elastomer in the total elastomer composition is 20-99 % by weight, preferably 50-98 %, most preferably 70-95 % by weight.

17. Use according to any of the above claims, **characterized in that** the proportion of the melt-processible, doped aniline polymer in the total elastomer composition is 1-70 % by weight, preferably 1.5-50 % by weight, and most preferably 3-30 % by weight.

18. Use according to any of Claims 3-17, **characterized in that** the proportion of the plasticizer in the total elastomer composition is 1-35 % by weight, preferably 2-20 % by weight.

19. Use according to any of the above claims, **characterized in that** it additionally contains one or more elective plastics components, preferably thermoplastic.

## Patentansprüche

1. Verwendung einer elektrisch leitenden thermoplastischen Elastomerzusammensetzung, die ein thermoplastisches Elastomer und ein dotiertes Anilin-Polymer umfaßt, **dadurch gekennzeichnet, daß** die Elastomerzusammensetzung nach einer Dehnung um 50 % zu mindestens 85 % zu ihrer früheren Gestalt zurückkehrt und daß sich die elektrische Leitfähigkeit der Elastomerzusammensetzung während und nach dem Strecken um weniger als eine Dekade verringert.

2. Verwendung nach Anspruch 1, **dadurch gekennzeichnet, daß** die Zusammensetzung umfaßt:
a) eine Menge von 10 bis 99 Gew.-% eines thermoplastischen Elastomers und
b) eine Menge von 0,5 bis 90 Gew.-% eines Anilin-Polymers, das ein konjugiertes Homo- oder Copolymer, bestehend aus mindestens einem unsubstituierten und/oder substituierten Anilin-mer ist, das mit einer Protonsäure dotiert ist, wobei die Protonsäure es derart funktionalisiert, daß das Anilin-Polymer schmelzverarbeitbar oder lösungsverarbeitbar ist.

3. Verwendung nach Anspruch 2, **dadurch gekennzeichnet, daß** die Zusammensetzung zusätzlich
c) eine Menge von 0,5 bis 40 Gew.-% eines Weichmachers umfaßt, welcher das dotierte Anilin-Polymer weich macht und sein Fließen begünstigt.

4. Verwendung nach einem der obigen Ansprüche, **dadurch gekennzeichnet, daß** der Weichmacher, der das dotierte Anilin-Polymer weich macht und sein Fließen begünstigt, eine Metallverbindung ist, deren Erweichungspunkt unter 300°C liegt und/oder die den pH des dotierten Anilin-Polymers auf den Bereich von 3 bis 8 einstellt.

5. Verwendung nach einem der obigen Ansprüche, **dadurch gekennzeichnet, daß** das Anilin-Polymer protoniert wird und erhältlich ist, indem es mit der funktionalisierenden Protonensäure auf eine Temperatur von 80 bis 250°C, vorzugsweise auf eine Temperatur von 120 bis 210°C, am günstigsten auf eine Temperatur von 150 bis 200°C erwärmt wird.

6. Verwendung nach Anspruch 5, **dadurch gekennzeichnet, daß** das Anilin-Polymer protoniert wird und erhältlich ist, indem es zusammen mit einer Protonensäure, die es funktionalisiert, unter Verwendung von Mischscherkräften des Typs, die bei der Schmelzverarbeitung von Kunststoffen verwendet werden, vorzugsweise durch Verwendung einer Apparatur, die für die Schmelzverarbeitung von Kunststoffen konzipiert ist, erwärmt wird.

7. Verwendung nach einem der Ansprüche 1 bis 6, **dadurch gekennzeichnet, daß** das Anilin-Polymer protoniert wird und erhältlich ist, indem es zusammen mit einer Protonensäure, die es funktionalisiert, in einem Lösungsmittel erwärmt wird und das Lösungsmittel durch Verdampfen entfernt wird.

8. Verwendung nach Anspruch 7, **dadurch gekennzeichnet, daß** das Lösungsmittel ein C₁-C₁₀-Alkohol, vorzugsweise Ethanol, ist.

9. Verwendung nach einem der Ansprüche 2 bis 8, **dadurch gekennzeichnet, daß** die dotierende Protonensäure eine nicht-oxidierende organische Protonensäure, vorzugsweise eine aromatische Sulfonsäure und am günstigsten Dodecylbenzolsulfonsäure ist.

10. Verwendung nach einem der Ansprüche 5 bis 9, **dadurch gekennzeichnet, daß** das Molverhältnis des konjugierten Homo- oder Copolymers, mindestens bestehend aus unsubstituierten und/oder substituierten Anilin-meren zur der Protonensäure, die es dotiert, in der erwärmten Reaktion im Bereich von 0,05 bis 3,0, vorzugsweise in einem Bereich von 0,1 bis 1,0 und am günstigsten in einem Bereich von 0,125 bis 0,5 liegt.

11. Verwendung nach einem der Ansprüche 4 bis 10, **dadurch gekennzeichnet, daß** die Metallverbindung mit einem weichmachenden Effekt ein Metall ist, das zu einer der Gruppen 1 bis 4 (IUPAC) des Periodensystems der Elemente gehört, vorzugsweise Zink ist.

12. Verwendung nach einem der Ansprüche 4 bis 11, **dadurch gekennzeichnet, daß** der Weichmacher ein Metallsalz einer Protonensäure, vorzugsweise einer nicht-oxidierenden organischen Protonensäure, bevorzugter einer aromatischen Sulfonsäure und am günstigsten der Dodecylbenzolsulfonsäure, ist.

13. Verwendung nach einem der Ansprüche 4 bis 12, **dadurch gekennzeichnet, daß** der Weichmacher ein Reaktionsprodukt einer Zink-Verbindung mit einer aromatischen Sulfonsäure ist, wobei das Reaktionsprodukt vorzugsweise durch Inkontaktbringen von Zinkoxid oder Zinkhydroxid mit Dodecylbenzolsulfonsäure bei einer erhöhten Temperatur erhalten wird.

14. Verwendung nach einem der Ansprüche 3 bis 13, **dadurch gekennzeichnet, daß** das Molverhältnis der Repetiereinheiten des thermoplastischen dotierten Anilin-Polymers zu den Molekülen des Weichmachers in einem Bereich von 0,20 bis 20, vorzugsweise von 0,3 bis 10 liegt.

15. Verwendung nach einem der vorangehenden Ansprüche, **dadurch gekennzeichnet, daß** das thermoplastische Elastomer ein Blockpolymer eines Monomers eines oder mehrer Typen, die ein hartes Polymer bilden, und eines Monomers eines oder mehrerer Typen, die ein weiches Polymer bilden, ist und vorzugsweise ein Blockcopolymer aus Styrol und einem Monomeren, das ein weiches Polymer bildet, ist, bevorzugter ein Poiy(Styrolblockkonjugierter Dienblock-Styrolblock) oder Poly(styrolblock-(Ethylen-1-alkenblock)-Styrolblock)-Copolymer, am bevorzugtesten ein Poly(Styrolblock)-Butadienblock-Styrolblock) oder Poly(Styrolblock-(Ethylen-Buten)block-Styrolblock)-Copolymer oder eine Kombination oder ein Gemisch davon ist.

16. Verwendung nach einem der vorangehenden Ansprüche, **dadurch gekennzeichnet, daß** der Verhältnisanteil des thermoplastischen Elastomers in der Gesamtelastomerzusammensetzung 20 bis 99 Gew.-%, vorzugsweise 50 bis 98 Gew.-%, am bevorzugtesten 70 bis 95 Gew.-% ist.

17. Verwendung nach einem der vorangehenden Ansprüche, **dadurch gekennzeichnet, daß** der Verhältnisanteil des schmelzverarbeitbaren, dotierten Anilin-Polymeren in der gesamten Elastomerzusammensetzung 1 bis 70 Gew.-%, vorzugsweise 1,5 bis 50 Gew.-% und am bevorzugtesten 3 bis 30 Gew.-% ist.

18. Verwendung nach einem der Ansprüche 3 bis 18, **dadurch gekennzeichnet, daß** der Verhältnisanteil des Weichmachers in der gesamten Elastomerzusammensetzung 1 bis 35 Gew.-%, vorzugsweise 2 bis 20 Gew.-% ist.

19. Verwendung nach einem der vorangehenden Ansprüche, **dadurch gekennzeichnet, daß** sie zusätzlich eine oder mehrere ausgewählte Kunststoffkomponenten, die vorzugsweise thermoplastisch sind, enthält.

## Revendications

1. Utilisation d'une composition d'élastomère thermoplastique électriquement conductrice, comprenant un élastomère thermoplastique et un polymère d'aniline dopé, **caractérisée par le fait que** la composition d'élastomère revient à au moins 85 % de sa forme précédente après un étirement de 50 % et **par le fait que** la conductivité électrique de la composition d'élastomère diminue de moins d'une décade pendant et après l'étirement, pour les applications nécessitant la rétention de la conductivité électrique lors de l'étirement.

2. Utilisation selon la revendication 1, **caractérisée par le fait que** la composition comprend
a) une quantité comprise entre 10 et 99 % en poids d'un élastomère thermoplastique et
b) une quantité comprise entre 0,5 et 90 % en poids de polymère d'aniline, qui est un homopolymère ou un copolymère conjugué constitué d'au moins un motif monomère d'aniline substitué et/ou non substitué, dopé par un acide protique, l'acide protique le fonctionnalisant de telle sorte que le polymère d'aniline puisse être traité par fusion ou en solution.

3. Utilisation selon la revendication 2, **caractérisée par le fait que** la composition comprend en outre
c) une quantité comprise entre 0,5 et 40 % en poids d'un plastifiant, qui plastifie le polymère d'aniline dopé et favorise son écoulement.

4. Utilisation selon l'une quelconque des précédentes revendications, **caractérisée par le fait que** le plastifiant, qui plastifie le polymère d'aniline dopé et favorise son écoulement, est un composé métallique dont le point de ramollissement est inférieur à 300 °C et/ou qui ajuste le pH du polymère d'aniline dopé dans une fourchette entre 3 et 8.

5. Utilisation selon l'une quelconque des précédentes revendications, **caractérisée par le fait que** ledit polymère d'aniline est protoné et peut être obtenu par chauffage avec ledit acide protique fonctionnalisant à une température comprise entre 80 et 250 °C, préférentiellement entre 120 et 210 °C, et plus préférentiellement entre 150 et 200 °C.

6. Utilisation selon la revendication 5, **caractérisée par le fait que** ledit polymère d'aniline est protoné et peut être obtenu par chauffage avec ledit acide protique le fonctionnalisant, en utilisant des forces de cisaillement du mélange du type employé dans le traitement par fusion des plastiques, préférentiellement en utilisant un appareil conçu pour le traitement par fusion des plastiques.

7. Utilisation selon l'une quelconque des revendications 1 à 6, **caractérisée par le fait que** ledit polymère d'aniline est protoné et peut être obtenu par chauffage avec un acide protique le fonctionnalisant, dans un solvant, et en éliminant le solvant par évaporation.

8. Utilisation selon la revendication 7, **caractérisée par le fait que** le solvant est un alcool en C₁ à C₁₀, préférentiellement l'éthanol.

9. Utilisation selon l'une quelconque des revendications 2 à 8, **caractérisée par le fait que** l'acide protique dopant est un acide protique organique non oxydant, préférentiellement un acide sulfonique aromatique, et plus préférentiellement l'acide dodécylbenzènesulfonique.

10. Utilisation selon l'une quelconque des revendications 5 à 9, **caractérisée par le fait que** le rapport molaire entre l'homopolymère ou le copolymère conjugué constitué d'au moins des motifs monomères d'aniline substituée ou non substituée et l'acide protique qui le dope, est, dans la réaction chauffée, compris entre 0,05 et 3,0, préférentiellement entre 0,1 et 1,0, et plus préférentiellement entre 0,125 et 0,5.

11. Utilisation selon l'une quelconque des revendications 4 à 10, **caractérisée par le fait que** le composé métallique possédant un effet plastifiant est un métal appartenant à l'un quelconque des groupes 1 à 4 (IUPAC) du Tableau périodique des éléments, préférentiellement le zinc.

12. Utilisation selon l'une quelconque des revendications 4 à 11, **caractérisée par le fait que** le plastifiant est un sel métallique, d'acide protique, préférentiellement un acide protique organique non oxydant, plus préférentiellement un acide sulfonique aromatique, et le plus préférentiellement l'acide dodécylbenzènesulfonique.

13. Utilisation selon l'une quelconque des revendications 4 à 12, **caractérisée par le fait que** le plastifiant est un produit de réaction d'un composé du zinc et d'un acide sulfonique aromatique, le produit de réaction étant préférentiellement obtenu par contact d'oxyde de zinc ou d'hydroxyde de zinc avec l'acide dodécylbenzènesulfonique à une température élevée.

14. Utilisation selon l'une quelconque des revendications 3 à 13, **caractérisée par le fait que** le rapport molaire entres les unités répétées du polymère d'aniline dopé thermoplastique et les molécules du plastifiant est compris entre 0,20 et 20, préférentiellement entre 0,3 et 10.

15. Utilisation selon l'une quelconque des précédentes revendications, **caractérisée par le fait que** l'élastomère thermoplastique est un polymère bloc d'un monomère d'un ou plusieurs types, formant un polymère dur, et d'un monomère d'un ou plusieurs types, formant un polymère souple, préférentiellement un copolymère bloc de styrène et un monomère formant un polymère souple, plus préférentiellement un copolymère poly(bloc styrène - bloc diène conjugué - bloc styrène) ou poly(bloc styrène - (bloc éthylène-1-alcène) - bloc styrène), le plus préférentiellement un copolymère poly(bloc styrène - bloc butadiène - bloc styrène) ou poly(bloc styrène -bloc (éthylène-butène) - bloc styrène), ou une combinaison ou un mélange desdits copolymères.

16. Utilisation selon l'une quelconque des précédentes revendications, **caractérisée par le fait que** la proportion de l'élastomère thermoplastique dans la composition d'élastomère totale est comprise entre 20 et 99 % en poids, préférentiellement entre 50 et 98 %, et plus préférentiellement entre 70 et 95 % en poids.

17. Utilisation selon l'une quelconque des précédentes revendications, **caractérisée par le fait que** la proportion du polymère d'aniline dopé, pouvant être traité par fusion, dans la composition d'élastomère totale, est comprise entre 1 et 70 % en poids, préférentiellement entre 1,5 et 50% en poids, et plus préférentiellement entre 3 et 30 % en poids.

18. Utilisation selon l'une quelconque des revendications 3 à 17, **caractérisée par le fait que** la proportion du plastifiant dans la composition d'élastomère totale est comprise entre 1 et 35 % en poids, préférentiellement entre 2 et 20 % en poids.

19. Utilisation selon l'une quelconque des précédentes revendications, **caractérisée par le fait qu'**elle contient en outre un ou plusieurs composants plastiques facultatifs, préférentiellement de type thermoplastique.
